Europäisches Patentamt

European Patent Office

Office européen des brevets

(11) Publication number: **0 099 421**

**B1**

(12) **EUROPEAN PATENT SPECIFICATION**

(45) Date of publication of patent specification: **17.09.86**

(21) Application number: **82106601.6**

(22) Date of filing: **21.07.82**

(51) Int. Cl.⁴: **C 02 F 3/30**

(54) **Biological wastewater treating system.**

(43) Date of publication of application:
**01.02.84 Bulletin 84/05**

(45) Publication of the grant of the patent:
**17.09.86 Bulletin 86/38**

(84) Designated Contracting States:
**AT BE CH DE FR GB IT LI LU NL SE**

(56) References cited:
**EP-A-0 026 938**
**US-A-3 994 802**
**US-A-4 056 465**
**US-A-4 162 153**

(73) Proprietor: **AIR PRODUCTS AND CHEMICALS, INC.**
**P.O. Box 538**
**Allentown, Pennsylvania 18105 (US)**

(72) Inventor: **Chen, Michael S.K.**
**R.D. 1, Box 140A**
**Zionsville, PA 18092 (US)**
Inventor: **Spector, Marshall L.**
**1225 North Marshall Street**
**Allentown, PA 18104 (US)**

(74) Representative: **Kador . Klunker . Schmitt-Nilson . Hirsch**
**Corneliusstrasse 15**
**D-8000 München 5 (DE)**

Courier Press, Leamington Spa, England.

## Description

This invention relates generally to improvements in the treatment of municipal sewage and/or industrial wastewater by the activated sludge process. It is particularly concerned with the control of operating conditions to enhance selective production and maintenance in the system of active biomass essentially free of filamentous growth, such that the attained sludge has favorable settling characteristics with the capability of substantial removal of phosphate values from the incoming wastewater. Under the selected operating conditions of the system according to the invention, the stated desired objectives are attained at lower consumption of oxygen per unit of BOD removal than heretofore required.

Background of the prior art

The prior art pertinent to the instant invention is discussed at length in U.S. Patent 4,056,465 issued to one of the present inventors. The present invention is directed to improvements over the system disclosed in said patent.

The selective production of a biomass species capable of removing phosphate values and producing a non-bulking sludge of rapidly settling characteristics is attained in accordance with said prior patent by strictly maintaining anaerobic conditions during an initial operating stage where incoming wastewater and recycled sludge from secondary clarification are mixed. Under these conditions the proliferation of undesired high surface area microorganisms is avoided while substantial quantities of BOD are sorbed from the influent wastewater by organisms having the capability of doing so under anaerobic conditions. The initial anaerobic zone, as described in the patent, may then be followed by an oxygenated aerobic zone where the food initially sorbed in the anaerobic zone is oxidized and any remaining BOD is sorbed and oxidized. During this aerobic stage the energy previously lost by hydrolysis of polyphosphates is recouped and polyphosphates are reformed and stored within the aerated biomass, thus removing phosphate from the mixed liquor.

If denitrification of the wastewater is also desired, the patent indicates that an anoxic zone may be interposed between the anaerobic and the oxygenated aerobic zone.

The term "anaerobic" is defined in the aforesaid patent "as the state existing within a sewage treating zone which is substantially free of $NO_x^-$ (i.e. less than 0.3 ppm and preferably less than 0.2 ppm expressed as elemental nitrogen) wherein conditions are maintained such that the dissolved oxygen concentration (DO) is less than 0.7 ppm and preferably less than 0.4 ppm".

The term "anoxic" is defined in the aforesaid patent "as the condition existing within a sewage treating zone wherein BOD is metabolized by nitrates and/or nitrites in initial total concentrations higher than about 0.5 ppm expressed as nitrogen, and dissolved oxygen is less than 0.7 ppm, preferably at less than 0.4 ppm".

As further described in the patent, in order to assure adequate oxygen presence in the aerobic oxygenated zone to effect desired metabolism of BOD and the desired phosphate uptake, the dissolved oxygen content (DO) of that zone should be maintained above 1 ppm and preferably above 2 ppm. In the several operating examples of the patent the average DO employed in the total aerobic zone is close to or above 6 ppm.

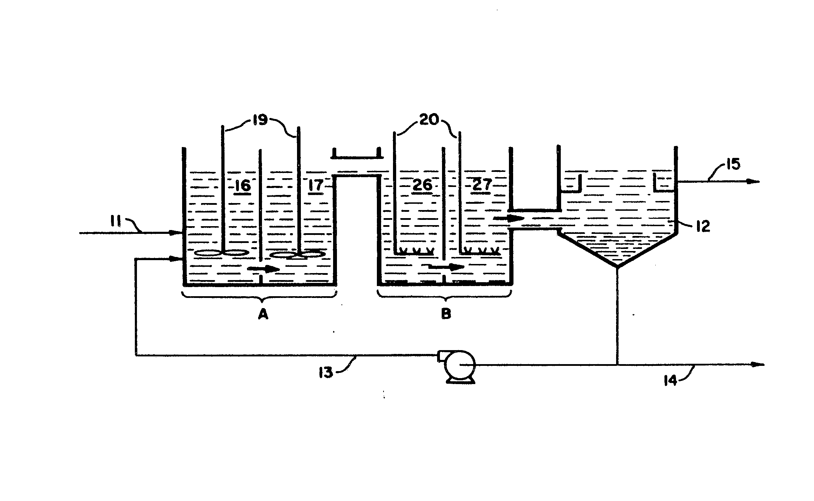

Systems of the type disclosed in Fig. 1 of US—Patent 4,056,465 having an initial anaerobic zone followed by an oxidation zone are sometimes denominated "A/O"™ systems. Systems of the type illustrated in Fig. 2 of said patent, having an anoxic zone intermediate the anaerobic and oxidation zones are referred to as "A/A/O" or "A²/O"™ systems.

Brief summary of the invention

It has now been found that substantial savings in operating costs can be achieved in accordance with the system and operating mode of the present invention, with effective BOD removal while obtaining dense sludge of good settling characteristics and desired high to adequate removal of phosphate from the wastewater influent. These cost savings result chiefly from lower oxygen consumption and lowered power requirements for oxygen mass transfer than in either (1) the conventional wholly aerobic activated sludge systems of the prior art using air or more concentrated oxygen gas, or (2) other disclosed systems employing one or more anaerobic stages in conjunction with one or more aerobic stages, as in US—Patent 4,056,465.

The operation of the present system differs from those previously known, in that the instant system is not bound by a minimum dissolved oxygen concentration in the oxidation zone and the oxidation zone is operated at a DO level of less than 1 ppm, whereas the prior art required a dissolved oxygen concentration or $NO_x^-$ equivalent of at least 1 ppm and preferably substantially greater than 2 ppm.

In the operation of an activated sludge system, the method which comprises:

a) producing a mixed liquor by initially mixing activated biomass with BOD-containing wastewater influent in a BOD sorption zone;

b) in a subsequent oxidation zone oxidizing BOD contained in the mixed liquor, including at least part of the BOD sorbed in said biomass;

c) settling the thus oxidized mixed liquor so as to separate the supernatant liquor from the more dense sludge including biomass; and

d) recycling at least a portion of said more dense sludge to provide activated biomass in said initial BOD sorption zone,

characterized in that said mixing in step (a) is effected under selected conditions such that less than 5% of the total $BOD_5$ is oxidized by oxygen or other oxidizing agents and that at least 25% and preferably at least 50% of the soluble $BOD_5$ is sorbed by the biomass in said sorption zone, wherein conditions in said BOD sorption zone are controlled to provide an F/M ratio in said zone of less than 10, wherein F is total $BOD_5$ introduced by the wastewater influent per day and M is the weight of biomass volatile suspended solids contained in said BOD sorption zone and the oxidizing in step (b) is effected under controlled aeration conditions such that at least 30% of the total influent $BOD_5$ is oxidized, said conditions including a dissolved oxygen content in said oxidation zone of less than 1 ppm.

In the initial sorption zone conditions are controlled to avoid excessive oxidation of BOD in that zone particularly during the period from startup until substantially steady state operation is achieved. Once the system has achieved "steady state" a higher percentage of oxidation can be permitted to occur in the sorption zone without suffering rapid washout of the desired species of biomass generated.

The biological stress which results in the selection of preferred biomass occurs in the BOD sorption zone. In the BOD oxidation zone which follows, energy is generated by the metabolization of BOD as a result of oxidation, which energy is utilized in the growth of biomass and removal of phosphate values from the bulk liquor to the interior of the biomass. The preferred species of biomass selectively generated and propagated under the initial conditions maintained in the BOD sorption zone according to the present invention, display a characteristic which is not ordinarily found in most conventional activated sludge systems. It has been observed that the rates of oxygen uptake are relatively slow in the BOD oxidation zone of the present process as compared to conventional activated sludge systems. Because of the slow oxygen uptake, the system of the present invention can be operated as a high rate system with minimum consumption per unit of BOD removed.

Brief description of the drawings

The single figure of the accompanying drawing is a schematic and diagrammatic side view of a simplified system for practice of the invention.

Detailed description of the invention

Referring to the accompanying drawing, a modified activated sludge treating facility is represented, in many respects similar to that depicted in Figure 1 of U.S. Patent 4,056,465. The wastewater to be treated, generally but not necessarily as clarified wastewater from a primary sedimentation tank or clarifier (not shown), initially enters the BOD sorption zone A through the inlet 11. In the sorption zone A the influent wastewater is admixed with recycled sludge settled in sedimentation tank or secondary clarifier 12 and recycled to zone A by line 13. A minor portion of the settled sludge is removed by line 14. The purified supernatant liquid is sent via line 15 to receiving streams or reservoirs with or without further treatment as need be.

As shown, zone A is preferably partitioned to provide two or more liquid treating sections in order to afford plug flow of the liquid through the BOD sorption zone A. It has been found that by provision of physically partitioned sections of the hydraulic equivalent thereof, there is better assurance of achieving the desired freedom from filamentous growth and thereby attaining good sludge characteristics even under adverse conditions. Such adverse conditions, for example, include operation with low concentrations of BOD wherein high surface area biomass would have an advantage in competing for sorption of BOD at low concentration. Bypassing of untreated BOD through the BOD sorption zone is minimized. In the particular embodiment illustrated, zone A is shown as partitioned into two sections or chambers 16 and 17, each equipped with stirring means 19. The liquid passes in proximate plug flow through the several sections of zone A and is discharged into BOD oxidation zone B.

While zone A is shown as having two partitioned sections 16 and 17, it will be understood that three or more such sections may be employed. Zone A and B may be separate interconnected vessels provided with suitable means for effecting substantial uni-directional flow of liquid from zone A to zone B with minimal back mixing.

Aeration of the liquid is effected in zone B in known manner; thus, as shown, compressed air may be admitted into the bottom of the oxidation zone by spargers 20. If desired, instead of or in addition to spargers, the oxygenated zone may be provided with mechanical aerators. Also, instead of air, oxygen of any desired purity may be admitted to zone B, in which event suitable means for convering all or part of the zone may be required. In practice, some oxidation, preferably as up to no more than about 1% of the total $BOD_5$ in the influent may occur in zone A, but normally substantially all the oxidation occurs in zone B.

As illustrated in the drawing, zone B is partitioned into two liquid treating sections 26 and 27, although, as will be understood, a larger number of such sections may be employed if so desired. One of the reasons for staging in zone B is because phosphate uptake is observed to be of first order relation with respect to soluble phosphate concentration; thus the low value of phosphate in the effluent is best obtained with plug flow configuration.

Zone A is herein designated a BOD sorption zone of a wastewater treatment plant. The term "BOD sorption zone" with respect to the described system of the present invention has reference to and is defined as that zone of a wastewater treatment plant in which the influent wastewater and recycled sludge are initially mixed and in which at least 25% and preferably at least 50% of the soluble $BOD_5$ content of the influent wastewater is transferred from the aqueous phase of the mixed liquor to the solid sludge. The term "soluble $BOD_5$" refers to biological oxygen demand which passes through a 1.25 micrometer glassfiber filter, exclusive of oxygen needed for oxidation of nitrogen values.

To obtain the stated extent of transfer of at least 25% of the soluble $BOD_5$ from the aqueous phase to the solid sludge, it is important that the following conditions be had.

1. The F/M ratio in the sorption zone, as hereinafter described, is maintained at less than 10 and preferably at less than 5. F is the weight of the total $BOD_5$ introduced by the influent wastewater per day and M is the weight of biomass measured as mixed liquor volatile suspended solids, i.e. MLVSS in the BOD sorption zone.

2. During the initial operation from startup and until substantially steady state operation is achieved, it is essential that less than 2% and preferably less than 1% of the influent total $BOD_5$ be oxidized, whether by oxygen or other oxidizing agents present in the BOD sorption zone.

3. After steady state operation is attained, good performance can be had with a somewhat higher extent of oxidation effected in the BOD sorption zone. Even in such event it is best that less than 5% and preferably less than 3% of the influent total $BOD_5$ be oxidized with oxygen and/or other oxidizing agents in the sorption zone.

As above set out, the principal oxidation of BOD present in the influent wastewater takes place in oxidation zone B. The term "oxidation zone" as employed with reference to the present system is defined as that zone of a wastewater treatment plant in which means for oxygen mass transfer are employed and the mixed liquor from the BOD sorption zone is contacted with oxygen and/or oxidizing agents under conditions and for a time sufficient to oxidize at least 30 percent of the total $BOD_5$ that was present in the initial wastewater influent.

As has already been indicated above, it is important that oxidation be limited in the BOD sorption zone even during steady state operation, and during the startup phase of the present process care be taken and conditions maintained so that no more than 2% and preferably less than 1% of the total $BOD_5$ be oxidised by reaction with either oxygen or other oxidizing agents (such as nitrite and/or nitrate—$NO_x$—) in the BOD sorption zone. To assure that the extent of oxidation in the BOD sorption zone is below or not greater than the indicated maxima, one or more of the following steps may be taken:

A. The vessel (or vessels) constituting zone A may be provided with a blanket of nitrogen or other inert gas at the liquid surface to avoid access thereto of atmospheric air; or a loose fitting cover may be provided at or above the liquid surface, or a rigid cover may be provided above the liquid surface with or without an inert gas blanket. Instead of or in addition to these indicated ways of limiting the extent of oxidation, if any, that could take place in the BOD sorption zone, nitrogen purge gas may be admitted into zone A.

B. Means for gaseous mass transfer are excluded from the BOD sorption zone. The zone is equipped with stirrers, as illustrated, for example, by reference 19 in the drawing, as opposed to spargers, surface aerators or other gas-liquid mass transfer devices.

C. Care must be taken to avoid introduction of excessive quantities of any oxidizing agent, such as nitrate and/or nitrite ($NO_x^-$) into the BOD sorption zone. The latter involves control of not only $NO_x^-$ that might be present in the wastewater influent but also $NO_x^-$ that might be recycled to that zone from a downstream source in the system.

Wastewater normally contains little or no $NO_x^-$ in the influent due to reduction of any nitrates and/or nitrites by BOD in the presence of microorganisms in the sewer lines feeding the treatment plant. A potential source of $NO_x^-$ is from recycled mixed liquor from the BOD oxidation zone of nitrifying biological systems, i.e. those which are designed to effect oxidation of ammoniacal BOD to $NO_x^-$. In such systems, as illustrated in Figure 2 of U.S. Patent 4,056,465, wherein an anoxic zone is interposed between the initial anaerobic treating zone and the oxygenated aerobic zone, a portion of the mixed liquid from the aerobic zone is recycled to the intermediate anoxic zone to effect reduction of $NO_x^-$ therein.

The present invention can be applied to systems including an anoxic zone positioned between the BOD sorption zone (A) and the oxidation zone (B). For the purpose of calculating extent of BOD oxidation in this invention, oxidation of BOD effected in the anoxic zone, shall be counted as though it had occurred in the oxidation zone. In such nitrifying systems, however, the quantity of $NO_x^-$ admitted to the BOD sorption zone needs to be controlled by avoiding recycle of mixed liquor from the aerobic zone of such system to the BOD sorption zone and by also controlling the $NO_x^-$ content in the recycled sludge from the clarifier underflow. The $NO_x^-$ concentration in the sludge recycle can be controlled by providing sufficient residence time in the clarifier and the sludge recycle line to permit adequate removal of $NO_x^-$ by reduction to elemental nitrogen through reactive contact with the biomass present in the sludge recycle liquor.

Conventional biological wastewater treating systems have not been able to produce dense, active filamentous-free sludge and also to remove substantial phosphorous values without the addition of chemicals. This indicates that the biology of the process of the present invention does not occur naturally but is the result of the stress applied in order to produce the steady state biology of the desired characteristics indicated.

Startup of the system of the present invention requires that a stringent biological stress be applied in order that the preferred organisms can outgrow conventional ones. This is accomplished by operation of the BOD sorption zone with minimal presence of oxidizing agents in order to maximize the applied stress. In this case, maximum stress is effected by maximum exclusion of oxygen and other oxidizing agents from the initial BOD sorption zone. Thus, those organisms which can utilize a nonoxidative source of energy, i.e. hydrolysis of polyphosphates, have an advantage in that only they have the energy required to effect active transport of BOD from the bulk liquor across the microorganism cell wall to the interior of the organism. To the extent that the energy for BOD transport is provided in this fashion, polyphosphate containing microorganisms have an advantage in sorbing BOD, (or food supply) which permits these organisms to dominate the population upon successive cycles through the system. This is not true in conventional activated sludge systems.

During initial operation in application of the process of the present invention, from startup and until steady state operation is attained, as is indicated above, care must be taken to minimize the extent of oxidation of BOD values in the BOD sorption zone. In practice the maximum permitted content of oxygen and/or other oxidizing agents, such as nitrate and/or nitrite, expressed as oxygen equivalent, should be such that less than 2% and preferably less than 1% of the total $BOD_5$ contained in influent wastewater is oxidized in that zone. When these precautions are observed during startup and initial operation of the system, both good sludge properties and increasing phosphate removal are evidenced within from two to six weeks. Attainment of steady state operation with these desired properties can be accelerated by addition of "seed sludge" containing polyphosphate values.

The operability of the system of the invention is dependent upon the initial presence of an effective BOD sorption zone. However, the biology of the present system is functional even in the event of excessive oxidation in the sorption zone until the desired active sludge species becomes displaced by conventionl sludge. Such displacement has been observed to take place relatively slowly, as in a period of about one to two months. Once the system has achieved "steady state", a somewhat higher percentage of oxidation may be permitted to occur in the BOD sorption zone without suffering rapid washout of polyphosphate-containing sludge. Washout is detected by the deterioration in the settling properties of the sludge and reduced ability to remove phosphate. If an upset does occur, normal operation can be restored in time by strictly limiting the permitted extent of oxidation in the BOD sorption zone in the same manner as during an initial startup.

While, as explained above, the biological stress which results in the selection of a preferred biomass occurs in the BOD sorption zone, the function of the BOD oxidation zone (B) is to generate energy by oxidation of BOD. This energy is used for growth of biomass and transfer of phosphate values from the bulk liquor to the interior of the biomass. Removal of phosphate and storage in the biomass as polyphosphates is estimated to require from about 1 to 5% of the energy generated by oxidation of the BOD. It is therefore believed that the preferred biomass of the present process does not occur in most conventional activated sludge systems, since the species which do not have the energy requirement for phosphate sorption and storage are able to use more energy for growth and will therefore predominate, unless the BOD is apportioned in a sorption zone as described in accordance with the present invention.

It has also been observed that the rates of oxygen uptake are relatively slow in the BOD oxidation zone of the present process as compared to conventional activated sludge systems. For instance, an oxygen uptake rate of 30 milligrams of oxygen per gram of VSS per hour at 20°C is rarely exceeded in the practice of the present invention, whereas in conventional aeration, the oxygen uptake rate can be over twice as great, as described, for example, in U.S. Patent 3,864,246. This indicates that the BOD sorbed in the sorption zone is stored in a form which is only slowly available for oxidation. The result is that the initial oxygen uptake rate is slow and further decreases slowly with time.

Because of the foregoing observations, the present system when operated as a high rate system, requires minimal oxygen per unit of BOD removed. Unoxidized BOD, of course, is wasted with the sludge. However, sufficient oxidation must occur to oxidize at least 30% of the total $BOD_5$ fed to the system. If BOD is not oxidized to a sufficient extent, the sorption of fresh BOD upon recycle of the clarifier underflow to the initial sorption zone, is inhibited. This has an adverse effect, in that upon repeated cycles, progressively lesser amounts of influent BOD is sorbed in the initial zone and progressively larger amounts of unsorbed BOD is transferred to the oxidation zone where it is sorbed and metabolized by conventional microorganisms. Under such conditions, the polyphosphate accumulating microorganisms eventually wash out.

It has been found that the minimum oxidation required for the system is 30% of the total $BOD_5$ in the influent. In a high rate system, oxygen consumption varies from 30 to 100% of the $BOD_5$ in the influent. A high rate system is defined in terms of overall F/M, as one having an F/M overall ratio greater than or equal to about 0.3. F is the weight of total $BOD_5$ introduced by the wastewater influent per day and M is the weight of MLVSS contained in all zones of the present system, including BOD sorption zone, BOD oxidation zone and anoxic zone, if present. With an F/M overall of less than about 0.3 and down to about 0.08, oxygen consumption is from about 80 to 150% of the total $BOD_5$ content of the influent. Oxygen requirements in excess of 100% are attributed to the fact that $BOD_5$ expresses only about two-thirds of BOD (infinite).

It has been observed that when operating high rate systems, i.e. at an overall F/M in excess of 0.3, the present system utilizes substantially less oxygen than that of conventional activated sludge systems. Moreover, even at these high throughput rates, the present system continues to remove BOD and substantial quantities of phosphates while maintaining a desirable non-filamentous biomass species producing sludge having excellent settling properties.

The obtained sludge has an SVI generally less than about 100 and a clarifier underflow having a solids concentration of greater than about 1%. To maintain these desired characteristics of the system, conditions must be controlled such that at least about 30 to 40% of the total $BOD_5$ is oxidized in the system. Failure to do so results in progressive worsening of sludge properties and lower phosphate removal.

An important consequence of causing the biological selection to occur in the BOD sorption zone is that in doing so there is no longer a requirement for a minimal dissolved oxygen concentration (DO) to be maintained in the oxidation zone. This is in contrast to prior art teachings (as found for example in U.S. Patents 3,864,246 and 4,162,153) wherein minimal DO levels of at least 1 ppm and generally more than 2 ppm of dissolved oxygen are required. The maintenance of the high dissolved oxygen levels is manifested in higher power requirements. For instance, with a system employing atmospheric air oxidation, by reduction of the DO level from 2 ppm to a level of less than 1 ppm, the energy requirement for a given quantity of oxygen transfer from the gas to the liquid phase of the system is reduced from about 14 to 25%. In the present system, the dissolved oxygen level is not the controlling factor, but rather the percent of total BOD oxidized in the respective zones.

The startup period of the present system is defined as the time required for the system to develop biomass of the desired type as evidenced by the steady state BOD in phosphate removal and sludge settling properties. It can also be defined as the time required for the system to recover from operational upsets.

The startup period can be substantially reduced by seeding a system with sludge previously conditioned in an operational system of the present type.

Example 1

A pilot plant having a BOD sorption zone, A, consisting of three 220 l (58 gallon) stages and a BOD oxidation zone, B, consisting of four 557.13 l (147 gallon) stages, was initially seeded with 28.43 l (7.5 gallons) of liquor containing about 1% of a phosphate-removing sludge, obtained from steady state operation of a laboratory A/O unit. Three weeks after addition of the seed sludge, stable operation for phosphate removal was attained.

It was operated for one week at low DO level (0.27 ppm). During the low DO operating period all of the stages in the oxidation zone (B) were maintained at a level below 1 ppm.

No attempt was made to control available oxygen, and oxygen was abundantly available in the oxidation zone as indicated by the relatively high oxygen consumption in excess of 0.681 kg (1.5 pounds) oxygen used per kg (pound) of BOD removed (unfiltered influent minus filtered effluent), i.e. lb $O_2$/lb $BOD_R$ (U-F).

The data recorded in operation of Example 1 is reported in Table 1.

TABLE 1

| | | |
|---|---|---|
| IDT (hr) | | 1.59 |
| T, °C | | 22.5 |
| avg. MLVSS, ppm | | 2683 |
| Avg. DO, ppm | A zone | 0.2 |
| | B zone | 0.27 |
| F/M | overall | 0.63 |
| | A zone | 2.77 |
| $BOD_s/P_s$ | | 11.2 |
| $BOD_s$, ppm | Infl. | 55 |
| | Effl. | 2 |
| % sorbed in A | | 57 |
| TSS, ppm | Infl. | 104 |
| | Effl. | 21 |
| $BOD_T$, ppm | Infl. | 112 |
| | Effl. | 9.5 |
| $P_s$, ppm | Infl. | 4.9 |
| | Effl. | 1.9 |
| | Net. removed | 3.0 |
| SVI | | 23 |

It is apparent from Example 1 operation that a substantial power for oxygen transfer in the oxidation zone can be saved. Thus, it is calculated that a saving of 23% in power requirements could be realized by operating the oxidation zone (B) at a DO level of 0.5 ppm, for example.

This calculation is based on the use of relatively pure oxygen to the system as determined by the solubility of oxygen in water at atmospheric pressure.

The phosphate removal in a system according to the invention is not greatly affected by whether high or low DO exists in the oxidation zone. It therefore appears that satisfactory performance of an A/O system can be had during a period of stable operation when the DO in the oxidizing zone is at a level below 1 ppm, provided that no more than 2% of the influent total $BOD_5$ is oxidized in the BOD sorption zone and that no less than 30% of the influent total $BOD_5$ is oxidized in the overall system.

Example 2

The following is a preferred operation according to the invention illustrating excellent operation of an A/O system with the DO level maintained in the oxidation zone at 0.3 ppm, with consequent large savings in required aeration power.

The pilot plant comprised a BOD sorption zone having three sections of 220 l (58 gallons) each and an oxidation zone of 4 sections of 557.13 l (147 gallons) each. The operating conditions and results are reported in Table 2.

TABLE 2

| | |
|---|---|
| Influent detention time (hrs) | 1.6 |
| Sludge Recycle, ratio to influent (vol/vol) | 0.20 |
| MLVSS avg. ppm | 2700 |
| Temperature, °C | 23 |
| F/M overall | 0.63 |
| BOD total, ppm | |
| Infl. | 112 |
| Effl. | 9.5 |
| BOD soluble, ppm | |
| infl. | 55 |
| Effl. | 2 |
| Total suspended solids, ppm | |
| Infl. | 104 |
| Effl. | 21 |
| Soluble phosphates, ppm {influent | 4.9 |
| effluent | 1.9 |
| $BOD_s/P_s$ in influent | 11 |
| % sorption $BOD_5$ soluble in BOD sorption zone | 57 |
| DO avg. in BOD sorbtion zone, ppm | 0.2 |
| DO avg. in oxidation zone, ppm | 0.3 |

From the table 2 it is apparent that an A/O system can perform satisfactorily when operating with relatively low DO in the oxidation zone. In such low DO operation, considerable savings can be had in the power requirements for oxygen transfer from the air to the liquid (at the same oxygen consumption). The calculated savings that can be achieved at the lower DO levels as compared to an operation at DO of 3 will be appreciated from the tabulation below calculated on the basis of using air and assuming that the oxygen saturation level in the liquid is at a concentration of 8 ppm.

| | | | | |
|---|---|---|---|---|
| D.O. in BOD Oxidation Zone, ppm | 0.3 | 1.0 | 2.0 | 3.0 |
| power saving, % | 65 | 29 | 17 | 0 |

While the invention has been described in connection with systems wherein the initial BOD sorption zone is followed by an oxidation zone (A/O system), it is equally applicable to systems designed for $NO_x$ removal wherein an anoxic zone is provided between the BOD sorption zone and the oxidation zone.

**Claims**

1. In the operation of an activated sludge system, the method which comprises:

a) producing a mixed liquor by initially mixing activated biomass with BOD-containing wastewater influent in a BOD sorption zone;

b) in a subsequent oxidation zone oxidizing BOD contained in the mixed liquor, including at least part of the BOD sorbed in said biomass;

c) settling the thus oxidized mixed liquor so as to separate the supernatant liquor from the more dense sludge including biomass; and

d) recycling at least a portion of said more dense sludge to provide activated biomass in said initial BOD sorption zone, characterized in that said mixing in step (a) is effected under selected conditions such that less than 5% of the total $BOD_5$ is oxidized by oxygen or other oxidizing agents and that at least 25% of the soluble $BOD_5$ is sorbed by the biomass in said sorption zone, wherein conditions in said BOD sorption zone are controlled to provide an F/M ratio in said zone of less than 10, wherein F is total $BOD_5$ introduced by the wastewater influent per day and M is the weight of biomass volatile suspended solids contained in said BOD sorption zone and the oxidizing in step (b) is effected under controlled aeration conditions such that at least 30% of the total influent $BOD_5$ is oxidized, said conditions including a dissolved oxygen content in said oxidation zone of less than one ppm (part per million).

2. The method as defined in Claim 1 wherein at least 50% of the soluble $BOD_5$ of said influent wastewater is sorbed by said biomass in said sorption zone.

3. The method as defined in Claim 1 wherein said BOD sorption zone comprises a series of at least two hydraulically distinct consecutive stages.

4. The method as defined in Claim 1 wherein said oxidation zone comprises a series of at least two hydraulically distinct consecutive stages.

5. The method as defined in Claim 1 wherein said initial BOD sorption zone is maintained under anaerobic conditions such that less than 2% of the influent total $BOD_5$ is oxidized in said zone.

6. The method as defined in Claim 1 wherein said wastewater influent contains phosphate values and wherein a major portion of said phosphate is removed from solution in the oxidation zone liquor and stored as polyphosphate in the biomass.

7. The method as defined in Claim 1 wherein the rate of introduction of the wastewater influent is so related to the total biomass in said sorption zone and said oxidation zone to provide an F/M overall in excess of 0.3, wherein F is the weight of the total $BOD_5$ introduced by the wastewater influent per day and M is the weight of biomass volatile suspended solids contained in said BOD sorption zone and said oxidation zone.

8. The method as defined in Claim 1 wherein said system comprises an anoxic zone intermediate said BOD sorption zone and said oxidation zone and wherein the rate of introduction of the wastewater influent is so related to the total biomass contained in said BOD sorption zone, said anoxic zone and said oxidation zone, to provide an overall F/M ratio in excess of 0.3 wherein F is the weight of the total $BOD_5$ introduced by the wastewater influent per day and M is the weight of biomass, the volatile suspended solids, contained in the BOD sorption zone, the anoxic zone and the oxidation zone.

9. The method as defined in Claim 1 wherein the F/M ratio in said BOD sorption zone is maintained at less than 5.

10. The method as defined in Claim 1 wherein said BOD sorption zone is operated under conditions such that less than 1% of the total influent $BOD_5$ is oxidized by oxygen or other oxidizing agents in said zone.

11. The method as defined in Claim 1 wherein at least part of the biomass in said system is obtained by seeding with biomass obtained from a system which has achieved steady state operation under conditions as defined in Claim 1.

**Patentansprüche**

1. Betrieb eines Belebtschlammsystems, wobei das Verfahren umfaßt:

(a) Herstellen einer gemischten Flüssigkeit durch anfängliches Vermischen belebter Biomasse mit BOD-enthaltendem Abwasserzufluß in einer BOD-Sorptionszone;

(b) Oxidieren des BOD, das in der gemischten Flüssigkeit enthalten ist, in einer nachfolgenden Oxidationszone, einschließlich zumindest eines Teils des BOD, das in der Biomasse sorbiert ist;

(c) Absetzen der so oxidierten gemischten Flüssigkeit, um die überstehende Flüssigkeit von dem dichteren Schlamm einschließlich der Biomasse abzutrennen; und

(d) Rezirkulieren zumindest eines Teils des dichteren Schlammes, um belebte Biomasse in der Anfangs-BOD-Sorptionszone zu schaffen, welches dadurch gekennzeichnet ist, daß das Mischen in Stufe (a) unter ausgewählten Bedingungen so durchgeührt wird, daß weniger als 5% des gesamten $BOD_5$ durch Sauerstoff oder andere Oxidationsmittel oxidiert wird und daß mindestens 25% des löslichen $BOD_5$ durch die Biomasse in der Sorptionszone sorbiert werden, worin die Bedingungen in der BOD-Sorptionszone geregelt sind, um ein F/M-Verhältnis in der Zone von weniger als 10 zu schaffen, worin F das gesamte, durch den Abwasserzufluß eingegebene $BOD_5$ pro Tag ist und M das Gewicht von Biomasseflüchtige suspendierte Feststoffe ist, die in der BOD-Sorptionszone enthalten sind, und die Oxidation in Stufe (b) unter geregelten Belüftungsbedingungen durchgeführt wird, so daß mindestens 30% des gesamten $BOD_5$-Zuflusses oxidiert wird, wobei die Bedingungen einen Gehalt an gelöstem Sauerstoff in der Oxidationszone von weniger als 1 ppm (part per million) umfassen.

2. Verfahren nach Anspruch 1, worin mindestens 50% des löslichen $BOD_5$ eines Abwasserzuflusses durch die Biomasse in der Sorptionszone sorbiert werden.

3. Verfahren nach Anspruch 1, worin die BOD-Sorptionszone eine Reihe von mindestens zwei hydraulische getrennten, aufeinanderfolgenden Stufen umfaßt.

4. Verfahren nach Anspruch 1, worin die Oxidationszone eine Reihe von mindestens zwei hydraulisch getrennten aufeinanderfolgenden Stufen umfaßt.

5. Verfahren nach Anspruch 1, worin die Anfangs-BOD-Sorptionszone unter anaeroben Bedingungen gehalten wird, so daß weniger als 2% des gesamten $BOD_5$-Zuflusses in der Zone oxidiert werden.

6. Verfahren nach Anspruch 1, worin der Abwasserzufluß Phosphatwerte enthält und worin ein Hauptanteil der Phosphate aus der Lösung in der Oxidationszonen-Flüssigkeit entfernt und als Polyphosphate in der Biomasse gelagert werden.

7. Verfahren nach Anspruch 1, worin die Geschwindigkeit des Eingebens des Abwasserzuflusses so auf die gesamte Biomasse in der Sorptionszone und der Oxidationszone besogen ist, um ein F/M-Gesamtverhältnis größer als 0,3 zu schaffen, worin F das Gewicht des gesamten $BOD_5$ ist, das durch den Abwasserzufluß pro Tag zugegeben wird, und M das Gewicht der Biomasseflüchtige suspendierte Feststoffe ist, die in der BOD-Sorptionszone und der Oxidationszone enthalten sind.

8. Verfahren nach Anspruch 1, worin das System eine Sauerstoffmangelzone zwischen der BOD-Sorptionszone und der Oxidationszone umfaßt und worin die Geschwindigkeit des Eingebens des Abwasserzuflusses so auf die gesamte Biomasse bezogen ist, die in der BOD-Sorptionszone, der Sauerstoffmangelzone und der Oxidationszone enthalten ist, um eine Gesamt-F/M-Verhältnis größer als 0,3 zu schaffen, worin F das

Gewicht des gesamten BOD$_5$ ist, das durch den Abwasserzufluß pro Tag zugegeben wird, und M das Gewicht der Biomasse, der flüchtigen suspendierten Feststoff ist, die in der BOD-Sorptionszone, der Sauerstoffmangelzone und der Oxidationszone enthalten sind.

9. Verfahren nach Anspruch 1, worin das F/M-Verhältnis in der BOD-Sorptionszone bei weniger als 5 gehalten wird.

10. Verfahren nach Anspruch 1, worin die BOD$_5$-Sorptionszone unter solchen Bedingungen betrieben wird, daß weniger als 1% des gesamten BOD$_5$-Zuflusses durch Sauerstoff oder andere oxidierende Mittel in dieser Zone oxidiert wird.

11. Verfahren nach Anspruch 1, worin mindestens ein Teil der Biomasse in dem System durch Säen mit Biomasse erhalten wird, die aus einem System erhalten wurde, das den Dauerzustandbetrieb unter in Anspruch 1 definierten Bedingungen erreicht hat.

**Revendications**

1. Dans le fonctionnement d'un système à boue activée le procédé qui comprend:

a) la production d'une liqueur mélangée par mélange initial d'une biomasse activée avec une eau résiduaire affluente ayant une DBO dans une zone de sorption de la DBO,

b) dans une zone d'oxydation ultérieure, l'oxydation de la DBO de la liqueur mélangée, y compris d'au moins une partie de la DBO sorbée dans ladite biomasse;

c) la sédimentation de la liqueur mélangée ainsi oxydée pour séparer la liqueur surnageante de la boue plus dense comprenant la biomasse; et

d) le recyclage d'au moins une portion de ladite boue plus dense pour fournir la biomasse activée dans ladite zone initiale de sorption de la DBO, caractérisé en ce que ledit mélange dans le stade (a) est effectué dans des conditions choisies telles que moins de 5% de la DBO$_5$ totale soient oxydés par l'oxygène ou d'autres agents oxydants et qu'au moins 25% de la DBO$_5$ soluble soient sorbés par la biomasse dans ladite zone de sorption, où les conditions dans ladite zone de sorption de la DBO sont ajustées pour assurer un rapport F/M dans ladite zone inférieur à 10, où F est la DBO$_5$ totale introduite par l'eau résiduaire affluente par jour et M est le poids des solides volatils en suspension dans la biomasse contenus dans ladite zone de sorption de la DBO, et l'oxydation dans le stade (B) est effectuée dans des conditions contrôlées d'aération pour qu'au moins 30% de la DBO$_5$ affluente totale soient oxydés, lesdites conditions comprenant un taux d'oxygène dissous dans ladite zone d'oxydation inférieur à 1 ppm (partie par million).

2. Le procédé comme défini dans la revendication 1 où au moins 50% de la DBO$_5$ soluble de ladite eau résiduaire affluente sont sorbés par ladite biomasse dans ladite zone de sorption.

3. Le procédé comme défini dans la revendication 1 où ladite zone de sorption de la DBO comprend une série d'au moins deux stades consécutifs distincts du point de vue hydraulique.

4. Le procédé comme défini dans la revendication 1 où ladite zone d'oxydation comprend une série d'au moins deux stades consécutifs distincts du point de vue hydraulique.

5. Le procédé comme défini dans la revendication 1 où ladite zone initiale de sorption de la DBO est maintenue dans des conditions anaérobies telles que moins de 2% de la DBO$_5$ totale affluente soient oxydés dans ladite zone.

6. Le procédé comme défini dans la revendication 1 où ladite eau résiduaire affluente contient des phosphates et où une majeure partie desdits phosphates est éliminée de la solution dans la zone d'oxydation de la liqueur et stockée sous forme de polyphosphates dans la biomasse.

7. Le procédé comme défini dans la revendication 1 où la vitesse d'introduction de l'eau résiduaire affluente est en relation telle avec la biomasse totale dans ladite zone de sorption et ladite zone d'oxydation qu'on obtienne un rapport global F/M supérieur à 0,3, où F est le poids de la DBO$_5$ totale introduite par l'eau résiduaire affluente par jour et M est le poids des solides volatils en suspension dans la biomasse contenus dans ladite zone de sorption de la DBO et ladite zone d'oxydation.

8. Le procédé comme défini dans la revendication 1 où ledit système comprend une zone anoxique intermédiaire à ladite zone de sorption de la DBO et à ladite zone d'oxydation et où la vitesse d'introduction de l'eau résiduaire affluente est en relation telle avec la biomasse totale contenue dans ladite zone de sorption de la DBO, ladite zone anoxique et ladite zone d'oxydation, qu'on obtienne un rapport F/M global supérieur à 0,3 où F est le poids de la DOB$_5$ totale introduite par l'eau résiduaire affluente par jour et M est le poids des solidas volatils en suspension dans la biomasse contenus dans la zone de sorption de la DBO, la zone anoxique et la zone d'oxydation.

9. Le procédé comme défini dans la revendication 1 où le rapport F/M dans ladite zone de sorption de la DBO est maintenu en dessous de 5.

10. Le procédé comme défini dans la revendication 1 où ladite zone de sorption de la DBO fonctionne dans des conditions telles que moins de 1% de la DBO$_5$ affluente totale soit oxydé par l'oxygène ou d'autres agents oxydants dans ladite zone.

11. Le procédé comme défini dans la revendication 1 où au moins une partie de la biomasse dans ledit système est obtenue par ensemencement avec une biomasse obtenue dans un système qui a atteint un fonctionnement en régime régulier dans des conditions comme défini dans la revendication 1.